# EUROPEAN PATENT SPECIFICATION

(11) **EP 2 093 116 B1**
(45) Date of publication and mention of the grant of the patent: **05.01.2011**
(21) Application number: 08003320.2
(22) Date of filing: 23.02.2008
(51) Int. Cl.: B60T 8/172, B60T 8/1755

(54) **Method and apparatus for deriving a vehicle stability-related signal**
Verfahren und Vorrichtung zum Ableiten eines fahrzeugstabilitätsbezogenen Signals
Procédé et appareil de déplacement d'un signal associé à la stabilité d un véhicule

(43) Date of publication of application: 26.08.2009
(73) Proprietor: GM Global Technology Operations, Inc., Detroit, MI 48265-3000 (US)
(72) Inventor: Trönnberg, Gabriel, 46375 Hjärtum (SE); Alfredsson, Samuel, 46042 Frändefors (SE)
(74) Representative: Strauss, Peter

(56) References cited:
- WO-A-2004/041612
- DE-A1- 4 222 958
- DE-A1- 10 119 907

## Description

The present invention relates generally to the field of electronic stability control of a motor vehicle, and in particular to a method and an apparatus for deriving a vehicle stability-related signal on which further steps of electronic stability control can be based.

DE 101 19 907 A1 discloses an electronic stability control method and apparatus in which a vehicle stability-related signal such as the yaw rate, the lateral acceleration and the steering wheel angular velocity of a motor vehicle are derived, and brakes of the vehicle are controlled based on these derived signals.

Kinematic quantities such as the lateral acceleration or the yaw rate, which can be measured on board a vehicle and based on which the directional stability of a vehicle might be judged, can take positive or negative values depending on the direction of a curve the vehicle is going through. In order to allow a reliable judgement of the vehicle stability and to decide on the necessity of stabilizing measures, e.g. left-right-selective braking, it is desirable to cancel short-time fluctuations of a stability-related signal, but conventional low pass filtering or averaging techniques are not satisfying in this respect, since positive and negative data tend to cancel out, so that if the observed kinematic quantity changes sign at a high rate, the low-pass filtered quantity tends to be smaller than the real value. This causes a risk of judging the vehicle to be stable when in fact it is not. In fact, the risk that a driver will lose control over a vehicle or that controlling the vehicle becomes difficult is more serious if the vehicle kinematic data change signs frequently than if they do not. If they do not, the vehicle is going straight or is going through a curve in the same direction for a long time, and it is easy for a driver to recognize a discrepancy between the intended path of the vehicle and the path it is actually following, and to countersteer appropriately, whereas if the vehicle is following a tortuous path, the opportunity for feedback is reduced substantially, making it difficult for the driver to guide the vehicle precisely along a desired path.

Another problem is that under high lateral loads, the tire stiffness, i.e. the ratio between a lateral force and a tire side-slip angle caused by this force, tends to decrease, i.e. there is no linear relation between the force and the side-slip angle. An estimate of the side-slip angle which is based on averaged or low pass filtered kinematic data will therefore be lower than the true value.

The object of the present invention is therefore to provide a method and an apparatus for deriving a vehicle stability-related signal which avoid the risk of overestimating the stability.

This object is achieved by a method for deriving a vehicle stability-related signal from a stream of signed kinematic data of a moving vehicle, comprising the steps of
a) judging whether a zero crossing of the signed kinematic data is imminent or not, and
b) when a zero crossing is judged to be imminent, taking a sample from the kinematic data and replacing data of the data stream by said sample until a zero crossing is judged not to be imminent, and
c) replacing negative kinematic data in the data stream by their absolute amount.

It should be noted here that while step b) relies on the result of step a) and must therefore be carried out after step a), step c) can be carried out at any time, before, simultaneously or after, with respect to steps a) and b).

After subjecting the data stream to steps b) and c), it may directly be output as the desired stability-related signal, or it may be subjected to a further step of
f) detecting a maximum in the data stream subjected to steps a) and c) and outputting said maximum as said stability-related signal.

A zero crossing may conveniently be judged to be imminent if the kinematic data are approaching zero at a rate which is above a predetermined threshold.

If the method further comprises a step of detecting a steering wheel angle of the vehicle, a further criterion for judging whether a zero crossing is imminent is if the steering wheel angle is changing or, preferably, approaching zero at a rate which is above a predetermined threshold.

On the other hand, a zero crossing may be judged not to be imminent if any of the following criteria is met:
- a current kinematic data is of higher amount than sampled data;
- the rate of change of the kinematic data is below a predetermined threshold;
- the rate of change of the steering wheel angle is below a predetermined threshold.

In case that a maximum in the data stream is detected, the method further preferably comprises the steps of
d) calculating estimated kinematic data based on vehicle longitudinal speed and steering wheel angle and
e) resetting the maximum if the difference between said measured data and said estimated data is below a predetermined threshold.

The resetting step takes account of the fact that if agreement between the calculated and the measured data is good, the vehicle is stable, and any judgement as to possibly lacking stability that has been formed previously is no longer valid.

The invention may be embodied in the form of a data processor program product comprising a data carrier in which program instructions for enabling a data processor to carry out the above described method are recorded in machine readable form.

The invention may further be embodied in the form of an apparatus comprising means for judging whether a zero crossing of the signed kinematic data is imminent or not; when a zero crossing is judged to be imminent, dating a sample of the kinematic data and replacing data of the data stream by said sample until a zero crossing is judged not to be imminent, and replacing negative kinematic data in the data stream by their absolute amount.

Further features and advantages of the invention will become apparent from the subsequent description of embodiments thereof referring to the appended drawings.
- Fig. 1: is a block diagram of an apparatus implementation of the invention;
- Fig. 2: is a flowchart of a method implementation of the invention;
- Fig. 3: is a flowchart of a second method implementation of the invention;
- Fig. 4: is an example of an input waveform, and
- Fig. 5: illustrates a filtered waveform derived from the waveform of Fig. 4.

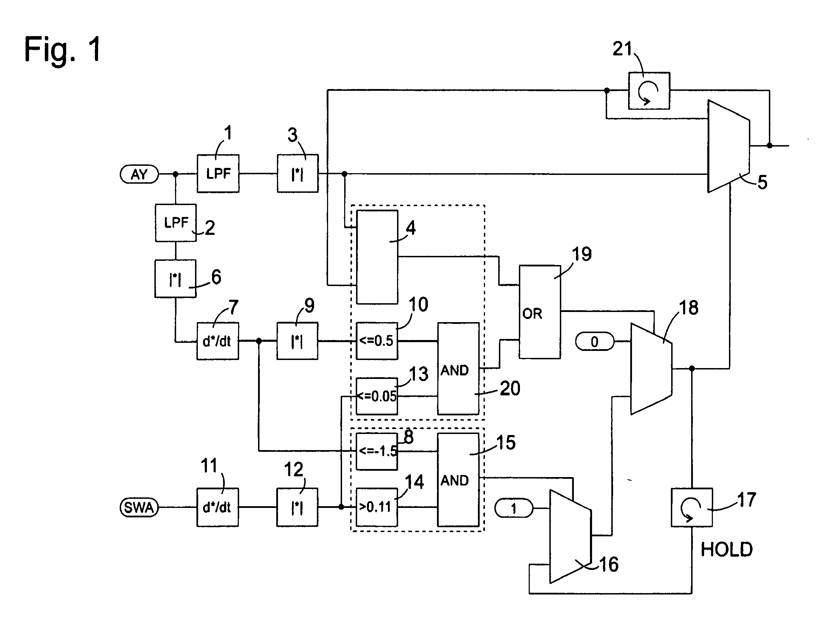

The filter shown in Fig. 1 has two input signals in the form of digital data streams extracted from data circulating on an internal bus of the vehicle, e.g. a CAN bus. One of the data streams, referred to as AY, carries lateral acceleration data detected by a sensor of the vehicle in real time, and the other, referred to as SWA, gives corresponding steering wheel angles. It should be noted, however, that the first input signal might represent any kinematic quantity which is correlated with lateral forces acting on the vehicle, such as the yaw rate, a difference between measured lateral acceleration AY and a lateral acceleration AY* calculated based e.g. on the vehicle longitudinal speed and the steering wheel angle SWA, and a difference between measured yaw rate YR and a yaw rate YR* calculated based e.g. on the vehicle longitudinal speed and the steering wheel angle SWA, or it might even be SWA, too. As said other data stream, SWA might also be replaced by some correlated quantity.

The input data stream AY is received by low-pass filters 1, 2, the cut-off frequencies which may be different, for suppressing input noise. Low-pass filter 1 has its output connected to an absolute amount generating circuit 3. The output of circuit 3 is connected to a first input of a comparator 4, and to a data input port of a multiplexer 5.

Low-pass filter 2 has its output connected to a second absolute amount generating circuit 6, which is in turn connected to a differentiating stage 7. The output of the differentiating stage 7 is applied in parallel to a fixed threshold comparator 8 and to a third absolute amount generating circuit 9. Circuit 9 has its output connected to another fixed threshold comparator 10. Comparator 8 will output a "true" signal if its input is strongly negative, indicating that |AY| is quickly approaching zero, and that a zero crossing of AY may therefore be imminent. Comparator 10 will output "true" if the amount of the derivative from differentiating stage 7 is below a rather low positive threshold, indicating that AY is changing rather slowly and that the vehicle is therefore probably in a steady state in which a zero crossing of AY is not to be expected.

The steering wheel angle signal SWA is applied first to a differentiating stage 11 and, subsequently, to another absolute amount generating circuit 12. The output of this circuit 12 is applied to fixed threshold comparators 13, 14. Comparator 13 outputs "true" if its input is below a given threshold, suggesting that the steering wheel angle SWA is changing slowly and that a change of the cornering direction of the vehicle need therefore not be expected. Conversely, comparator 14 outputs "true" if its input exceeds a threshold which is higher than that of comparator 13.

By means of an AND gate 15, the output signals of comparators 8 and 14 control a multiplexer 16. Multiplexer 16 has a constantly true signal "1" applied to one of its inputs and a hold status signal from a delay register 17 to the other.

The output signal of multiplexer 16 is applied to a data input of a further multiplexer 18, which has a constant "false" signal "0" applied to its other data input. Multiplexer 18 is controlled by the output signal of an OR gate 19, which has for inputs the output of an AND gate 20 connected to comparators 10 and 13, and the output of comparator 4. The output of multiplexer 18 is entered into delay register 17 to be stored and delayed therein, and at the same time controls multiplexer 5. The output of multiplexer 5 is the output of the filter of Fig. 1, and it is delayed and fed back to the other input of multiplexer 5 via a further delay register 21. The output of delay register 21 is further applied to the other input of comparator 4.

As will be apparent from the above, the output of AND gate 15 is "true" if the input data streams AY, SWA vary rapidly, and there is reason to expect a zero crossing. In that case, multiplexer 16 outputs the constant "true" signal, indicated by "1" in Fig. 1, to multiplexer 18. While AND gate 15 outputs "true", the output of AND gate 20 will be "false". If further the output of circuit 3 is lower than that of register 21, comparator 4 also outputs "false", and so does OR gate 19. Multiplexer 18 will then output "true", which is stored and delayed in delay register 17 and controls multiplexer 5 to output the contents of register 21.

If the amount of AY is increasing, there is no reason to expect a zero crossing. In that case, the output of circuit 3 is higher than that of register 21, and comparator 4 outputs "true". So does OR gate 19, and multiplexer 18 is controlled to output "false".

If input signals AY and SWA are changing slowly, comparators 10, 13 will both output "true", and so will OR gate 19, so that under these circumstances, too, multiplexer 5 outputs the output from absolute amount generating circuit 3.

When the rates of change of the input signals AY, SWA are such that at least one of comparators 10, 13 and at least one of comparators 8, 14 outputs "false", the contents "true" or "false" of delay register 17 will not change and are applied at the control input of multiplexer 5.

In short, the filter of Fig. 1 can be set to have two operating modes, a first one in which it outputs the output of absolute amount generating circuit 3, and a second in which it outputs the contents of register 21. The first mode is switched on as a default when the filter of Fig. 1 starts operation, and it is switched on whenever the output of OR gate 19 becomes "true", i.e. if the amount of AY is increasing, or when the rate of change of AY and SWA is low. It will switch to the second mode if the amount of AY is decreasing sharply, and at the same time the rate of change of SWA is high. If none of these conditions is met, the operating mode will stay unchanged.

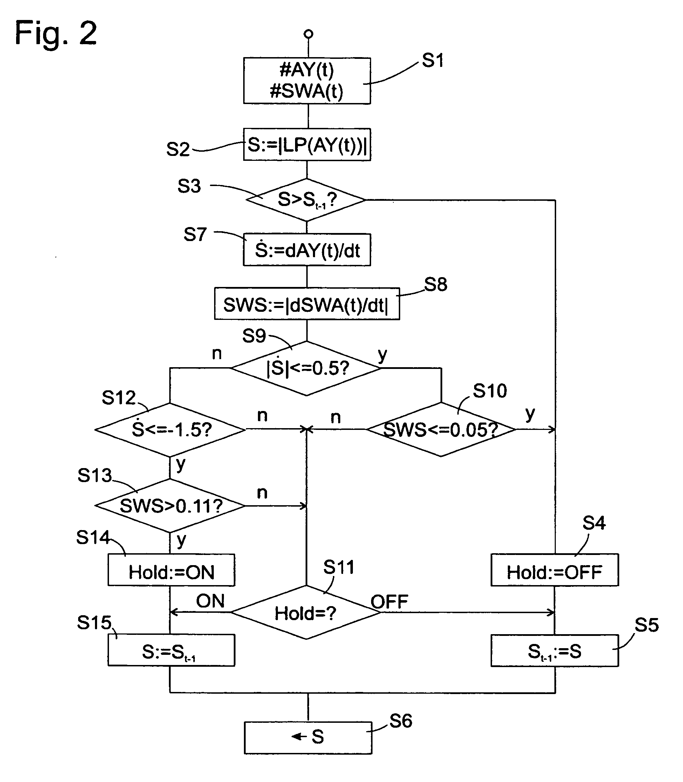

The invention can be implemented in method form, as shown in the flowchart of Fig. 2. A first step S1 of the method is to detect the values of AY and SWA at a present instant t. Step S2 determines the absolute amount S of a low pass filtered lateral acceleration AY at time t. If the amount S is higher than the amount Sₜ₋₁ of the low pass filtered lateral acceleration at a previous execution time t-1 of the method (step S3), a status flag "hold" is set to OFF in step S4, Sₜ₋₁ is overwritten by S in step S5, and S is output in step S6.

If it turns out in step S3 that S is decreasing, the time derivative Ṡ of AY is obtained in step S7, and the absolute amount of the rate of change of the steering wheel angle SWA at time t, referred to as the steering wheel speed SWS, is calculated in step S8.

In step S9, the absolute amount of Ṡ is compared to a first threshold. If the first threshold is not exceeded, i.e. if AY is changing slowly, the method proceeds to step S10, in which SWS is compared to a second threshold. If SWS is found to be below this second threshold, steps S4 to S5 are executed. Otherwise, the method proceeds to step S11, in which the "hold" flag is checked. If it is "off", steps S5 and S6 is executed; if it is "on", S is overwritten by the stored value Sₜ₋₁ in step S15 and is output in step S6.

If the amount of Ṡ is found to exceed the first threshold in step S9, Ṡ is compared to a third, negative threshold in step S12. If Ṡ is above this threshold, the method branches to step S11 and proceeds as described above; otherwise it advances to step S13, where SWS is compared to a fourth threshold which is higher than the second. If SWS is below the fourth threshold, the method also branches to step S11; if it is higher, the "hold" flag is set to ON in step S14, and steps S15, S6 of updating Ṡ and outputting S are executed.

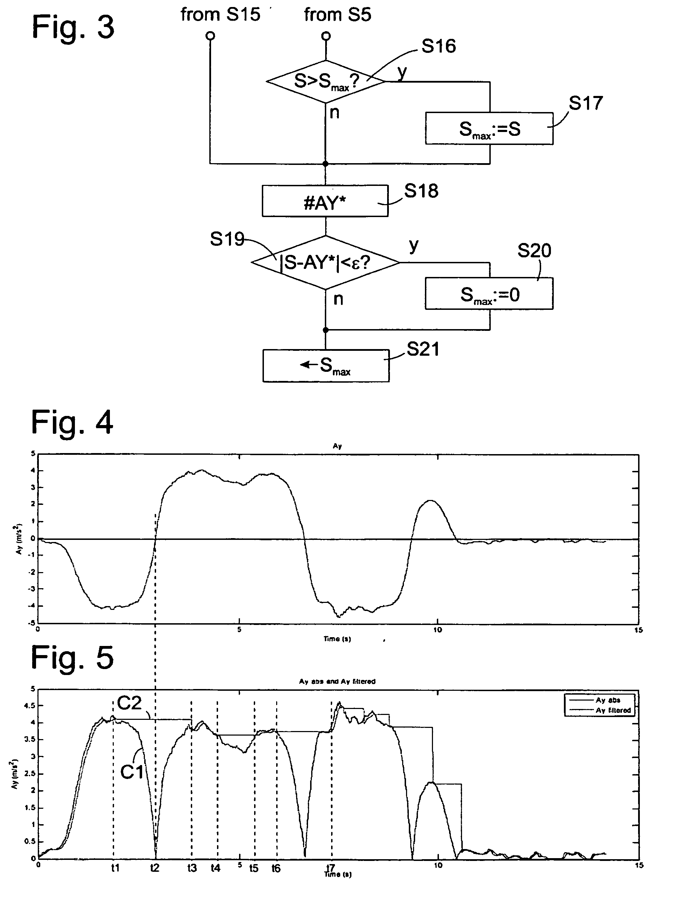

Fig.3 is a flowchart of a sequence of steps which can replace step S6 in a second method embodiment of the invention. Here step S5 is followed by a step S16 of comparing S to a previously stored maximum value, Sₘₐₓ. If it is found that S exceeds Sₘₐₓ, Sₘₐₓ is overwritten by S in step S17.

If step S17 is carried out repeatedly, Sₘₐₓ will converge towards a measure of the maximum lateral acceleration the vehicle will support without sliding on the ground it is presently moving on, i.e. it is representative of the friction coefficient of this ground.

In order to take account of a possible decrease of the friction coefficient, it is useful to reset Sₘₐₓ from time to time. This is done here by monitoring the vehicle side-slip in steps S18, S19: An expected value of the lateral acceleration, AY*, is calculated in step S18. S18 follows S17, or S16 if S did not exceed Sₘₐₓ. Step S18 can also be reached directly from step S15 of Fig. 2. AY* may be calculated by associating to currently measured steering wheel angle SWA the radius of the associated trajectory of the vehicle at the low speed limit, and then calculating the lateral acceleration AY* that would result if this trajectory was followed exactly at the current longitudinal speed Vel of the vehicle. If this difference drops below a threshold ε, Sₘₐₓ is reset in step S20. In this way, Sₘₐₓ will not be reset while the vehicle is under a continuously high lateral load, i.e. when cornering continuously, but between two cornering phases a reset will take place. Step S21 outputs Sₘₐₓ.

An example of the effect of the apparatus of Fig. 1 or the method of Fig. 2 is shown in Fig. 4 and 5.

Fig. 4 is an exemplary waveform of the lateral acceleration AY measured in a vehicle in motion. In Fig. 5, curve C1 gives the absolute amount of the waveform of Fig. 4, and curve C2 is the result of the filtering. At a time t1, the amount of the lateral acceleration AY is decreasing quickly, and the steering wheel angle SWA, not shown in Fig. 4 and 5, is also approaching zero, causing the "hold" flag to be set "true". The output of the filter remains constant at the value it had at the time t1, until the "hold" flag is reset again at time t3. A zero crossing of AY at time t2 does not show in the output curve C2. At t3 the "hold" flag is reset due to a decreasing rate of change the amount of at least one of SWA and AY.

A fast decrease of SWA and AY at time t4 causes the "hold" flag to be set again, until, at time t5, the amount of AY increases beyond the value sampled at t4.

In the time interval t6 to t7 another zero crossing is suppressed in the output waveform C2 by entering the "hold" mode.

### List of reference signs

- 1.: Low-pass filter
- 2.: Low-pass filter
- 3.: absolute amount generating circuit
- 4.: comparator
- 5.: multiplexer
- 6.: absolute amount generating circuit
- 7.: differentiating stage
- 8.: comparator
- 9.: absolute amount generating circuit
- 10.: comparator
- 11.: differentiating stage
- 12.: absolute amount generating circuit
- 13.: comparator
- 14.: comparator
- 15.: AND gate
- 16.: multiplexer
- 17.: register
- 18.: multiplexer
- 19.: OR gate
- 20.: AND gate
- 21.: register

## Claims

1. A method for deriving a vehicle stability-related signal from a stream of signed kinematic data (AY) of a moving vehicle, **characterized by** the steps of
a) judging whether a zero crossing of the signed kinematic data (AY) is imminent or not (S3, S9, S10, S12, S13), and
b) when a zero crossing is judged to be imminent, taking a sample from the kinematic data and replacing data of the data stream by said sample (S15) until a zero crossing is judged not to be imminent, and
c) replacing negative kinematic data in the data stream by their absolute amount (S2).

2. The method of claim 1, wherein in step b) a zero crossing is judged to be imminent if the kinematic data are approaching zero at a rate which is above a predetermined threshold (S12).

3. The method of claim 1 or 2, further comprising the step of detecting (S1) a steering wheel angle (SWA) of the vehicle, and wherein in step a) a zero crossing is judged to be imminent if the steering wheel angle (SWA) is approaching zero at a rate which is above a predetermined threshold (S13).

4. The method of any of the preceding claims, wherein in step b) a zero crossing is judged not to be imminent if a current kinematic data is of higher amount than a sampled data (S3).

5. The method of any of the preceding claims, wherein in step b) a zero crossing is judged not to be imminent if the rate of change of the kinematic data is below a predetermined threshold (S9).

6. The method of any of the preceding claims, further comprising the step (S1) of detecting a steering wheel angle (SWA) of the vehicle, and wherein in step a) a zero crossing is judged to not be imminent if the rate of change (SWS) of the steering wheel angle (SWA) is below a predetermined threshold (S10).

7. The method of any of the preceding claims, wherein the kinematic data are representative of a lateral acceleration (AY) or of a yaw rate (YR) of the vehicle.

8. The method of any of the preceding claims, further comprising the step of
d) outputting the data stream subjected to steps b) and c) as said stability-related signal (S6).

9. The method of any of the claims 1 to 7, further comprising the step of
f) detecting a maximum (Sₘₐₓ) (S16, S17) in the data stream (AY) subjected to steps b) and c) and outputting said maximum (Sₘₐₓ) as said stability-related signal (S21).

10. The method of claim 9, wherein the data of said stream are measured data, further comprising the steps of
d) calculating estimated kinematic data (AY*) based on vehicle longitudinal speed and steering wheel angle (SWA) (S18) and
e) resetting (S20) the maximum (Sₘₐₓ) if the difference between said measured data (S) and said estimated data (AY*) is below a predetermined threshold.

11. A data processor program product comprising a data carrier in which program instructions for enabling a data processor to carry out the method of one of claims 1 to 10 are recorded in machine-readable form.

12. An apparatus for deriving a vehicle stability-related signal from a stream of signed kinematic data (AY) of a moving vehicle, **characterized by** means for
a) judging whether a zero crossing of the signed kinematic data is imminent or not (1-4, 6-15, 19, 20),
b) when a zero crossing is judged to be imminent, taking a sample of the kinematic data (21) and replacing data of the data stream by said sample (16-19) until a zero crossing is judged not to be imminent, and
c) replacing negative kinematic data in the data stream by their absolute amount (3).

## Patentansprüche

1. Verfahren zum Ableiten eines fahrzeugstabilitätsbezogenen Signals von einem Strom signierter, kinematischer Daten (AY) eines bewegten Fahrzeugs, **gekennzeichnet durch** folgende Schritte:
a) Feststellen, ob ein Nulldurchgang der signierten, kinematischen Daten (AY) bevorsteht oder nicht (S3, S9, S10, S12, S13) und
b) wenn festgestellt wird, dass ein Nulldurchgang bevorsteht, Entnehmen eines Samples der kinematischen Daten und Ersetzen von Daten des Datenstroms **durch** das Sample (S15), bis festgestellt wird, dass kein Nulldurchgang bevorsteht, und
c) Ersetzen negativer kinematischer Daten im Datenstrom **durch** deren absoluten Wert (S2).

2. Verfahren gemäß Anspruch 1, wobei in Schritt b) ein bevorstehender Nulldurchgang festgestellt wird, wenn die kinematischen Daten sich dem Nullwert mit einer Geschwindigkeit annähern, die über einem bestimmten Schwellwert (S12) liegt.

3. Verfahren gemäß Anspruch 1 oder 2, das ferner den Schritt der Bestimmung (S1) eines Lenkradwinkels (SWA) des Fahrzeugs umfasst, und wobei im Schritt a) ein Nulldurchgang als bevorstehend festgestellt wird, wenn sich der Lenkradwinkel (SWA) dem Nullwert mit einer Geschwindigkeit annähert, die über dem bestimmten Schwellwert (S13) liegt.

4. Verfahren gemäß einem der vorangehenden Ansprüche, wobei in Schritt b) ein Nulldurchgang als nicht bevorstehend festgestellt wird, wenn ein aktuelles kinematisches Datum einen höheren Wert als ein gesampeltes Datum (S3) hat.

5. Verfahren gemäß einem der vorangehenden Ansprüche, wobei in Schritt b) ein Nulldurchgang als nicht bevorstehend festgestellt wird, wenn die Änderungsrate der kinematischen Daten unter einem bestimmten Schwellwert (S9) liegt.

6. Verfahren gemäß einem der vorangehenden Ansprüche, das ferner den Schritt (S1) der Feststellung eines Lenkradwinkels (SWA) des Fahrzeugs umfasst, und wobei in Schritt a) ein Nulldurchgang als nicht bevorstehend festgestellt wird, wenn die Änderungsrate (SWS) des Lenkradwinkels (SWA) unter einem bestimmten Schwellwert (S10) liegt.

7. Verfahren gemäß einem der vorangehenden Ansprüche, wobei die kinematischen Daten repräsentativ für eine Seitenbeschleunigung (AY) oder einer Giergeschwindigkeit (YR) des Fahrzeugs sind.

8. Verfahren gemäß einem der vorangehenden Ansprüche, das ferner folgenden Schritt umfasst:
d) Ausgeben des den Schritten b) und c) unterworfenen Datenstroms als stabilitätsbezogenes Signal (S6).

9. Verfahren gemäß einem der Ansprüche 1 bis 7, das ferner folgenden Schritt umfasst:
f) Bestimmen eines Maximums (Sₘₐₓ) (S16, S17) im Datenstrom (AY), der den Schritten b) und
c) unterworfen ist, und Ausgeben des Maximums (Sₘₐₓ) als stabilitätsbezogenes Signal (S21).

10. Verfahren gemäß Anspruch 9, wobei die Daten des Stroms Messdaten sind, die ferner folgende Schritte umfassen:
d) Berechnen der geschätzten kinematischen Daten (AY*) auf Basis der Längsgeschwindigkeit des Fahrzeugs und des Lenkradwinkels (SWA) (S18) und
e) Rücksetzen (S20) des Maximums (Sₘₐₓ), wenn die Differenz zwischen den Messdaten (S) und den geschätzten Daten (AY*) unter einem bestimmten Schwellwert liegt.

11. Datenverarbeitungsprogrammprodukt, das einen Datenträger umfasst, auf dem Programmbefehle in maschinenlesbarer Form aufgezeichnet sind, die einem Datenprozessor die Ausführung des Verfahrens eines der Ansprüche 1 bis 10 ermöglichen.

12. Vorrichtung zur Ableitung eines fahrzeugstabilitätsbezogenen Signals von einem Strom signierter kinematischer Daten (AY) eines bewegten Fahrzeugs, **gekennzeichnet durch** Mittel zum
a) Feststellen, ob ein Nulldurchgang der signierten, kinematischen Daten bevorsteht oder nicht (1-4, 6-15, 19, 20),
b) wenn ein bevorstehender Nulldurchgang als bevorstehend festgestellt wird, Entnehmen eines Samples der kinematischen Daten (21) und Ersetzen der Daten des Datenstroms **durch** das Sample (16-19), bis festgestellt wird, dass kein Nulldurchgang bevorsteht, und
c) Ersetzen negativer kinematischer Daten im Datenstrom **durch** deren absoluten Wert (3).

## Revendications

1. Procédé pour dériver un signal relatif à la stabilité du véhicule à partir d'un flux de données de cinématique signées (AY) d'un véhicule en mouvement, **caractérisé en ce qu'**il comprend les étapes de :
a) détermination du fait qu'un passage à zéro des données de cinématique signées (AY) est imminent ou non (S3, S9, S10, S12, S13), et
b) quand un passage à zéro est jugé imminent, échantillonnage des données de cinématique et remplacement de données du flux de données par ledit échantillon (S15) jusqu'à ce qu'un passage à zéro ne soit pas jugé imminent, et
c) remplacement des données de cinématique négatives dans le flux de données par leur valeur absolue (S2).

2. Procédé selon la revendication 1 dans lequel, dans l'étape b), un passage à zéro est jugé imminent si les données de cinématique approchent de zéro à une vitesse supérieure à un seuil prédéterminé (S12).

3. Procédé selon la revendication 1 ou 2, comprenant en outre l'étape de détection (S1) d'un angle du volant (SWA) du véhicule, et dans lequel, dans l'étape a), un passage à zéro est jugé imminent si l'angle du volant (SWA) approche de zéro à une vitesse supérieure à un seuil prédéterminé (S 13).

4. Procédé selon l'une quelconque des revendications précédentes dans lequel, dans l'étape b), un passage à zéro est jugé non imminent si les données de cinématique actuelles sont de grandeur supérieure aux données échantillonnées (S3).

5. Procédé selon l'une quelconque des revendications précédentes, dans lequel, dans l'étape b), un passage à zéro est jugé non imminent si la vitesse de changement des données de cinématique est inférieure à un seuil prédéterminé (S9).

6. Procédé selon l'une quelconque des revendications précédentes, comprenant en outre l'étape (S1) de détection d'un angle du volant (SWA) du véhicule, et dans lequel, dans l'étape a), un passage à zéro est jugé non imminent si la vitesse de changement (SWS) de l'angle du volant (SWA) est inférieure à un seuil prédéterminé (S10).

7. Procédé selon l'une quelconque des revendications précédentes, dans lequel les données de cinématique sont représentatives d'une accélération latérale (AY) ou d'un taux de lacet (YR) du véhicule.

8. Procédé selon l'une quelconque des revendications précédentes, comprenant en outre l'étape de
d) émission en sortie du flux de données soumis aux étapes b) et c) comme ledit signal relatif à la stabilité (S6).

9. Procédé selon l'une quelconque des revendications 1 à 7, comprenant en outre l'étape de
f) détection d'un maximum (Sₘₐₓ) (S16, S17) dans le flux de données (AY) soumis aux étapes b) et c) et émission en sortie dudit maximum (Sₘₐₓ) comme ledit signal relatif à la stabilité (S21).

10. Procédé selon la revendication 9, dans lequel les données dudit flux sont des données mesurées, comprenant en outre les étapes de
d) calcul de données de cinématique estimées (AY*) basées sur la vitesse longitudinale du véhicule et l'angle du volant (SWA) (S18) et
e) réinitialisation (S20) du maximum (Sₘₐₓ) si la différence entre lesdites données mesurées (S) et lesdites données estimées (AY*) est inférieure à un seuil prédéterminé.

11. Programme de traitement de données comprenant un support de données dans lequel des instructions de programme permettant à un processeur de données d'exécuter le procédé selon l'une des revendications 1 à 10 sont enregistrées sous une forme pouvant être lue par une machine.

12. Appareil pour dériver un signal relatif à la stabilité du véhicule à partir d'un flux de données de cinématique signées (AY) d'un véhicule en mouvement, **caractérisé en ce qu'**il comprend des moyens pour :
a) déterminer si un passage à zéro des données de cinématique signées est imminent ou non (1-4, 6-15, 19, 20),
b) quand un passage à zéro est jugé imminent, échantillonnage des données de cinématique (21) et remplacement des données du flux de données par ledit échantillon (16-19) jusqu'à ce qu'un passage à zéro soit jugé non imminent, et
c) remplacement des données de cinématique négatives dans le flux de données par leur valeur absolue (3).
